# EUROPÄISCHE PATENTANMELDUNG

(11) **EP 1 698 297 A1**
(43) Veröffentlichungstag der Anmeldung: **06.09.2006**
(21) Anmeldenummer: 06110683.7
(22) Anmeldetag: 06.03.2006
(51) Int. Cl.: A61C 1/18

(54) **Zahnärztliches Instrument mit einer rheologischen Kupplung**

(30) Priorität: 04.03.2005 DE 102005010558
(71) Anmelder: Sirona Dental Systems GmbH, 64625 Bensheim (DE)
(72) Erfinder: Rein, Matthias, 64653, Lorsch (DE)
(74) Vertreter: Sommer, Peter

(57) **Zusammenfassung**

Die vorliegende Erfindung betrifft ein zahnärztliches Instrument (2) mit einem Antrieb (4) und einem Abtrieb (6), wobei zwischen dem Antrieb (4) und dem Abtrieb (6) eine Kupplung (24) zur Übertragung eines Drehmomentes von dem Antrieb (4) auf den Abtrieb (6) und an dem Abtrieb (6) ein Behandlungswerkzeug (22) vorgesehen ist. Die Kupplung (24) ist zur Übertragung eines Drehmomentes von dem Antrieb (4) auf den Abtrieb (6) als rheologische Kupplung (24) ausgebildet. Damit ist eine genaue Drehmomentsteuerung oder - begrenzung bei einfacher Handhabung und energiesparendem Betrieb gewährleistet.

## Beschreibung

### Technisches Gebiet

Die vorliegende Erfindung betrifft ein zahnärztliches Instrument mit einem Antrieb und einem Abtrieb, wobei zwischen dem Antrieb und dem Abtrieb eine Kupplung zur Übertragung eines Drehmomentes von dem Antrieb auf den Abtrieb und an dem Abtrieb ein Behandlungswerkzeug vorgesehen ist.

### Stand der Technik

Aus dem Stand der Technik sind unterschiedliche zahnärztliche Instrumente bekannt, wie beispielsweise zahnärztliche Bohr- oder Schleifinstrumente. Die bekannten Instrumente umfassen regelmäßig die folgenden Komponenten.

So weisen die bekannten zahnärztlichen Instrumente zunächst einen Antrieb auf. Dieser umfasst regelmäßig einen von einer Stromquelle gespeisten Elektromotor mit einer entsprechenden Antriebswelle. Die Antriebswelle ist an eine Abtriebswelle eines Abtriebes gekoppelt, wodurch das Drehmoment der Antriebswelle auf die Abtriebswelle übertragen wird und ein an dem Abtrieb angebrachtes Werkzeug, wie beispielsweise ein Bohr- oder Schleifwerkzeug, in Rotation versetzt wird.

Die Drehmomentbegrenzung oder die Drehmomentsteuerung erfolgt beim Stand der Technik auf unterschiedliche Weise. So ist es zum einen bekannt, das Drehmoment über einen entsprechend regel- bzw. steuerbaren Elektromotor zu steuern. So wird das Drehmoment über den ohnehin vorhandenen Elektromotor des Antriebs gesteuert. Diese Lösung hat jedoch den Nachteil, dass ein hoher regelungstechnischer Aufwand betrieben werden muss, so dass diese Instrumente mit einem großen apparativen Aufwand verbunden sind, der die Handhabung des Instrumentes nachhaltig erschwert.

Neben der vorbeschriebenen Möglichkeit zur Steuerung des Drehmomentes ist noch eine weitere Lösung zur Begrenzung des Drehmomentes bekannt. Bei dieser Lösung kommt eine magnetische, drehmomentbegrenzende Kupplung zum Einsatz, bei der die Antriebswelle des Antriebes mit der Abtriebswelle des Abtriebes zur Drehmomentübertragung über ein Magnetfeld gekuppelt ist. Diese Lösung hat jedoch den Nachteil, dass das magnetische Feld unmittelbar dazu dient, den Antrieb mit dem Abtrieb zu verbinden, so dass hohe magnetische Feldstärken erforderlich sind, die den Stromverbrauch des Instrumentes stark erhöhen. Darüber hinaus ist das Grenzdrehmoment bei derartigen Kupplungen nicht sehr genau einstellbar.

Der vorliegenden Erfindung liegt somit die Aufgabe zu Grunde, ein zahnärztliches Instrument mit einem Antrieb, einem Abtrieb und einer dazwischenliegenden Kupplung zur Übertragung eines Drehmomentes von dem Antrieb auf den Abtrieb zu schaffen, wobei eine genaue Drehmomentsteuerung oder - begrenzung bei einfacher Handhabung und energiesparendem Betrieb des Instrumentes gewährleistet sein soll.

### Darstellung der Erfindung

Die Lösung der vorgenannten Aufgabe erfolgt an Hand der Merkmale des Patentanspruches 1. Vorteilhafte Ausführungsformen der Erfindung sind Gegenstand der Unteransprüche.

Das erfindungsgemäße zahnärztliche Instrument weist einen Antrieb und einen Abtrieb auf. Der Antrieb kann beispielsweise ein von einer Stromquelle versorgter Elektromotor sein, über dessen Antriebswelle das notwendige Drehmoment abgegeben wird. Der Abtrieb kann beispielsweise von einer Abtriebswelle und einer damit verbundenen rotierbaren Werkzeughalterung gebildet sein. An dem Abtrieb ist ein Behandlungswerkzeug vorgesehen, wobei es sich hierbei um die üblichen zahnärztlichen Behandlungswerkzeuge handeln kann. Zwischen dem Antrieb und dem Abtrieb ist eine Kupplung zur Übertragung eines Drehmomentes von dem Antrieb auf den Abtrieb vorgesehen. Erfindungsgemäß ist die Kupplung zur Übertragung eines Drehmomentes von dem Antrieb auf den Abtrieb als rheologische Kupplung ausgebildet.

Durch den Einsatz einer rheologischen Kupplung, wobei es sich beispielsweise um eine elektrorheologische, magnetorheologische oder dilatant-rheologische Kupplung handeln kann, lässt sich unter besonders niedrigem Kupplungsenergieaufwand eine zuverlässige Verbindung zwischen dem Antrieb und dem Abtrieb des zahnärztlichen Instrumentes herstellen. Dies ist darauf zurückzuführen, dass im Gegensatz zu den magnetischen Drehmomentbegrenzungen der eingangs beschriebenen Art das elektrische bzw. magnetische Feld selbst nicht dazu dient, eine drehfeste Verbindung zwischen der Antriebsseite und der Abtriebsseite der Kupplung herzustellen. Vielmehr dient das elektrische bzw. magnetische Feld ausschließlich der Modifikation der Flüssigkeit innerhalb der rheologischen Kupplung. Darüber hinaus ist der apparative Aufwand geringer als bei den bekannten steuer- bzw. regelbaren elektrischen Motoren, so dass das erfindungsgemäße zahnärztliche Instrument einerseits energiesparend arbeitet und andererseits einfach zu handhaben ist. Außerdem lässt sich ein Grenzdrehmoment einfach und präzise über das elektrische oder magnetische Feld einstellen.

In einer bevorzugten Ausführungsform des erfindungsgemäßen zahnärztlichen Instrumentes ist die rheologische Kupplung als eine elektrorheologische und/oder eine magnetorheologische Kupplung ausgebildet ist. Hier ist die magnetorheologische Kupplung besonders vorteilhaft, da sich bei magnetorheologischen Flüssigkeiten im Gegensatz zu den elektrorheologischen Flüssigkeiten - die regelmäßig in magnetorheologischen bzw. elektrorheologischen Kupplungen enthalten sind - Verunreinigungen und Temperaturveränderungen nur unwesentlich auf die Eigenschaften der magnetorheologischen Flüssigkeiten auswirken.

In einer weiteren bevorzugten Ausführungsform des erfindungsgemäßen zahnärztlichen Instrumentes ist die rheologische Kupplung als eine dilatant-rheologische Kupplung ausgebildet. Bei einer dilatant-rheologischen Flüssigkeit hängt die Viskosität von der Schergeschwindigkeit innerhalb der Flüssigkeit ab. Eine solche Kupplung hat den Vorteil, dass auf eine elektrische Steuerung verzichtet werden kann.

In einer weiteren bevorzugten Ausführungsform des erfindungsgemäßen zahnärztlichen Instrumentes weist die Kupplung eine Steuerfelderzeugungseinheit zur Erzeugung eines magnetischen Feldes für die magnetorheologische Kupplung bzw. zur Erzeugung eines elektrischen Feldes für die elektrorheologische Kupplung auf. Eine solche Steuerfelderzeugungseinheit ist demzufolge in der Lage, ein entsprechendes magnetisches oder elektrisches Feld zu erzeugen, welches die rheologische Flüssigkeit in der Kupplung und somit das Übertragungsverhalten der Kupplung beeinflusst. Hierbei kann es sich beispielsweise um Mittel zur Erzeugung elektrischer Felder, wie beispielsweise Kondensatoren, oder um Mittel zur Erzeugung magnetischer Felder, wie beispielsweise Spulen, handeln.

Gemäß einer weiteren vorteilhaften Ausführungsform des erfindungsgemäßen zahnärztlichen Instrumentes ist eine Steuerungseinheit zur Steuerung des Antriebes und der Steuerfelderzeugungseinheit vorgesehen. Die ohnehin vorgesehene Steuerungseinheit für den Antrieb kann also gleichermaßen für die Steuerung der Steuerfelderzeugungseinheit genutzt werden. Dies ermöglicht auch eine einfache gegenseitige Abstimmung von Ausgangsdrehmoment und zu übertragendem Drehmoment.

In einer weiteren vorteilhaften Ausführungsform der Erfindung weist die Kupplung ein Drehmomentübertragungsmedium auf, das sich aus einer Trägerflüssigkeit zusammensetzt, in die polarisierbare Festkörperteilchen dispergiert sind. Die Festkörperteilchen sind also in der Trägerflüssigkeit verteilt und bilden unter Einwirkung eines elektrischen oder magnetischen Feldes Ketten aus, die sich von der Antriebsseite der Kupplung zu der Abtriebsseite der Kupplung erstrecken und somit den Antrieb und den Abtrieb drehfest miteinander koppeln. In Abhängigkeit von der Stärke des angelegten magnetischen oder elektrischen Feldes kann das von der Kupplung zu übertragende Drehmoment festgelegt werden. Wird dieses überschritten, so reißen die gebildeten Ketten ab und es wird kein Drehmoment mehr übertragen (Drehmomentbegrenzung) oder aber das Drehmoment wird nur noch in einer bestimmten Größenordnung (schlupfende Übertragung) übertragen.

In einer weiteren vorteilhaften Ausführungsform des erfindungsgemäßen zahnärztlichen Instrumentes umfasst das Drehmomentübertragungsmedium ferner einen Stabilisator. Der Stabilisator umschließt die Festkörperteilchen in der Trägerflüssigkeit und verhindert deren Absetzen und Koagulation.

In einer weiteren vorteilhaften Ausführungsform des erfindungsgemäßen zahnärztlichen Instrumentes ist die nichtpolare Trägerflüssigkeit ein Öl, insbesondere ein Silikonöl.

In einer weiteren vorteilhaften Ausführungsform des erfindungsgemäßen zahnärztlichen Instrumentes bestehen die polarisierbaren Festkörperteilchen aus Metall, insbesondere aus ferromagnetischem Metall.

In einer weiteren bevorzugten Ausführungsform des erfindungsgemäßen zahnärztlichen Instrumentes ist die Steuerfelderzeugungseinheit als Spulenanordnung ausgebildet, wobei sich das Drehmomentübertragungsmedium im Wirkungsbereich des magnetischen Feldes der Spulenanordnung befindet. Unter dem Einfluss des durch die Spulenanordnung erzeugten magnetischen Steuerfeldes werden die Festkörperteilchen in der oben beschriebenen Art und Weise zu Ketten ausgebildet, die eine Übertragung des Drehmomentes erlauben. Hier handelt es sich demzufolge um eine magnetorheologische Kupplung.

In einer besonders bevorzugten Ausführungsform des erfindungsgemäßen zahnärztlichen Instrumentes ist die Spulenanordnung als Ringkernspule ausgebildet, die die Kupplung mantelseitig umgibt. Das Magnetfeld einer Ringkernspule ist im Inneren der Spule besonders homogen und eignet sich daher in ausgezeichneter Weise zur Kontrolle des rheologischen Eigenschaften der magnetorheologischen Flüssigkeit.

In einer weiteren bevorzugten Ausführungsform des erfindungsgemäßen zahnärztlichen Instrumentes ist die Steuerfelderzeugungseinheit als Kondensatoranordnung ausgebildet ist, wobei sich das Drehmomentübertragungsmedium im Wirkungsbereich des elektrischen Feldes der Kondensatoranordnung befindet. Unter dem Einfluss des durch die Kondensatoranordnung erzeugten elektrischen Steuerfeldes werden die Festkörperteilchen in der oben beschriebenen Art und Weise zu Ketten ausgebildet, die eine Übertragung des Drehmomentes erlauben. Hier handelt es sich demzufolge um eine elektrorheologische Kupplung.

In einer weiteren bevorzugten Ausführungsform des erfindungsgemäßen zahnärztlichen Instrumentes kann die Größe des abtriebsseitigen Drehmoments durch die Kupplung gesteuert werden. Bei dieser Ausführungsform ist demzufolge nicht nur eine einfache Drehmomentbegrenzung gegeben, vielmehr wird das zu übertragende Drehmoment gezielt über die Beeinflussung der Viskosität der rheologischen Flüssigkeit eingestellt.

In einer weiteren bevorzugten Ausführungsform des erfindungsgemäßen zahnärztlichen Instrumentes ist in dem zahnärztlichen Instrument ein Sensor vorgesehen, der das über die Kupplung übertragene Moment misst. Ein solcher Sensor kann beispielsweise als induktiver Sensor oder als Torsionssensor ausgebildet sein. Mithilfe eines solchen Sensors kann eine effektive Steuerung des übertragenen Drehmomentes bewirkt werden.

In einer weiteren bevorzugten Ausführungsform des erfindungsgemäßen zahnärztlichen Instrumentes ist die Kupplung in sich abgeschlossen und/oder gekapselt ausgebildet. Dadurch ist die Kupplung unempfindlich gegen Verschleiß durch Eindringen von Fremdpartikeln und gegen Sterilisieren.

Um ein besonders vielseitiges zahnärztliches Instrument zu schaffen, kann das an dem Abtrieb angeordnete Behandlungswerkzeug ausgewechselt werden, beispielsweise durch ein andersartiges zahnärztliches Werkzeug, wie dies bei derartigen Instrumenten üblich ist.

### Kurzbeschreibung der Zeichnungen

Fig. 1 zeigt die schematische Darstellung einer Ausführungsform des erfindungsgemäßen zahnärztlichen Instrumentes und
Fig. 2 zeigt eine schematische Darstellung der rheologischen Kupplung von Fig. 1.

### Ausführungsbeispiel der Erfindung

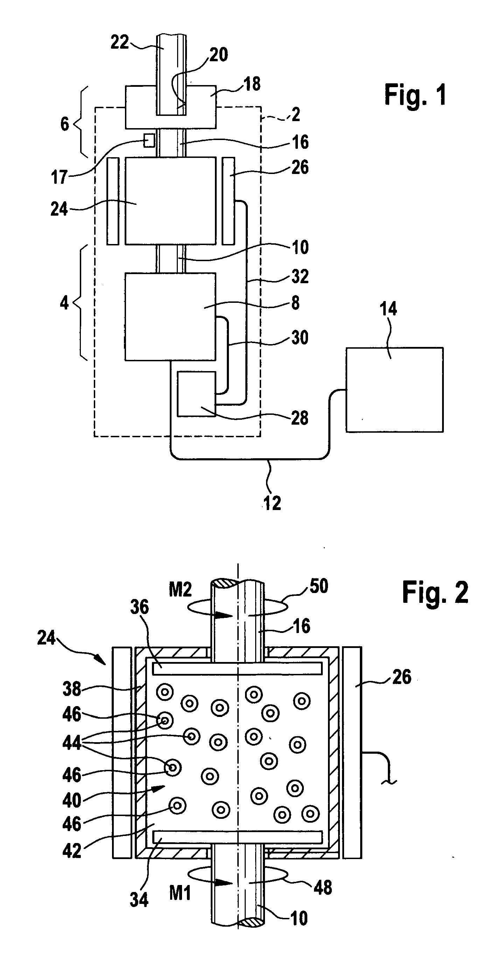

Fig. 1 zeigt die schematische Darstellung einer Ausführungsform des erfindungsgemäßen zahnärztlichen Instrumentes 2. Bei dem gezeigten Instrument 2 handelt es sich um ein zahnärztliches Handinstrument.

Das zahnärztliche Instrument 2 weist einen Antrieb 4 und einen Abtrieb 6 auf. Der Antrieb 4 setzt sich aus einem Elektromotor 8 und einer Antriebswelle 10 zusammen, das heißt, der Elektromotor 8 treibt die Antriebswelle 10 an. Der Elektromotor 8 ist über eine Versorgungsleitung 12 mit einer Stromquelle 14 verbunden, die außerhalb des Handinstrumentes 2 angeordnet ist. Es versteht sich jedoch von selbst, dass die Stromquelle 14 auch innerhalb des Handinstrumentes 2 angeordnet sein kann, beispielsweise in Form von Akkumulatoren o.ä. Der Abtrieb 6 setzt sich aus einer Abtriebswelle 16 mit einem Sensor 17 zur Erfassung des Antriebsmoments und einer drehfest mit der Antriebswelle verbundenen Werkzeughalterung 18 zusammen, die aus dem Handinstrument 2 herausragt und eine Aufnahme 20 für das weiterhin vorgesehene Behandlungswerkzeug 22 aufweist. Das Behandlungswerkzeug 22, bei dem es sich in diesem Fall um ein zahnärztliches Bohr- oder Schleifwerkzeug handelt, kann ausgewechselt werden. Das Behandlungswerkzeug 22 ist drehfest in der Aufnahme 20 angeordnet.

Zwischen dem Antrieb 4 und dem Abtrieb 6 ist eine Kupplung 24 vorgesehen, die der Übertragung eines Drehmomentes von dem Antrieb 4 auf den Abtrieb 6 dient. Genauer gesagt ragt die Antriebswelle 10 mit ihrem dem Elektromotor 8 abgewandten Ende und die Abtriebswelle 16 mit ihrer der Werkzeughalterung 18 abgewandten Ende in die Kupplung 24, um miteinander gekoppelt zu werden. Die Kupplung 24, die als elektrorheologische oder magnetorheologische Kupplung ausgebildet ist, weist ferner eine Steuerfelderzeugungseinheit 26 auf. Die Funktionsweise der Kupplung 24 sowie der zugehörigen Steuerfelderzeugungseinheit 26 wird später eingehender beschrieben.

Das Instrument 2 weist ferner eine Steuerungseinheit 28 auf. Die Steuerungseinheit 28 ist über eine erste Steuerleitung 30 mit dem Elektromotor 8 des Antriebes 4 und über eine zweite Steuerleitung 32 mit der Steuerfelderzeugungseinheit 26 der Kupplung 24 verbunden. Die Steuerungseinheit 28 steuert somit sowohl den Elektromotor 8 des Antriebes 4 als auch die Steuerfelderzeugungseinheit 26 der Kupplung 24 über die entsprechende Steuerleitung 30 bzw. 32.

Im folgenden wird der Aufbau sowie die Funktionsweise der elektro- oder magnetorheologischen Kupplung 24 unter Bezugnahme auf Fig. 2 eingehender erläutert.

Die Kupplung 24 weist ein antriebsseitiges Rotationsteil 34, das drehfest mit der Antriebswelle 10 verbunden ist, und ein abtriebsseitiges Rotationsteil 36 auf, das drehfest mit der Abtriebswelle 16 verbunden ist. Die Rotationsteile 34, 36 sind voneinander beabstandet in einem Kupplungsgehäuse 38 angeordnet. In dem Kupplungsgehäuse 38 ist zwischen den Rotationsteilen 34, 36 ein Drehmomentübertragungsmedium 40 vorgesehen. Dieses Drehmomentübertragungsmedium 40 setzt sich aus einer nichtpolaren Trägerflüssigkeit 42, in diesem Falle ein Silikonöl, und in der Trägerflüssigkeit 42 dispergierten polarisierbaren Festkörperteilchen 44 zusammen. Die Festkörperteilchen 44 bestehen aus einem ferromagnetischen Metall. Das Drehmomentübertragungsmedium 40 umfasst ferner einen Stabilisator 46, der die metallenen Festkörperteilchen 44 umgibt und vor einer Koagulation schützt.

Das Drehmomentübertragungsmedium 40 der rheologischen Kupplung 24 dient der Übertragung eines Drehmomentes von dem antriebsseitigen Rotationsteil 34 auf das abtriebsseitige Rotationsteil 36. Zu diesem Zweck kann mittels der Steuerfelderzeugungseinheit 26 ein elektrisches und/oder magnetisches Steuerfeld erzeugt werden, das auf das Übertragungsmedium 40 einwirkt und dieses beeinflusst. Ein magnetisches Steuerfeld wird durch eine Steuerfelderzeugungseinheit 26 in Form einer die Kupplung umgebende Ringkernspule geschaffen. Alternativ könnte ein elektrisches Steuerfeld beispielsweise durch eine Steuerfelderzeugungseinheit 26 in Form einer Kondensatoranordnung erzeugt werden. Das elektrische oder magnetische Steuerfeld hat die im folgenden beschriebene Auswirkung auf das Drehmomentübertragungsmedium 40.

Die ursprünglich homogen in der Trägerflüssigkeit 26 verteilten metallenen Festkörperteilchen 44 des Drehmomentübertragungsmediums 40 verbinden sich auf Grund des auf sie einwirkenden elektrischen und/oder magnetischen Steuerfeldes unter Ausbildung von nicht näher dargestellten Ketten. Diese Ketten erstrecken sich von dem antriebsseitigen Rotationsteil 34 zu dem abtriebsseitigen Rotationsteil 36 der rheologische Kupplung 24, so dass beide Rotationsteile 34, 36 derart miteinander gekoppelt sind, dass sie ein Drehmoment M1, M2 übertragen können, wie dies in Fig. 2 an Hand der Rotationspfeile dargestellt ist.

Auf die vorbeschriebene Weise kann ein Grenzdrehmoment festgelegt werden, dessen Größe von der Intensität des angelegten Steuerfeldes abhängt. Bei Überschreiten dieses Grenzdrehmomentes reißen die Ketten und es kann kein Drehmoment mehr übertragen werden. Darüber hinaus ist es mit der vorliegenden Ausführungsform jedoch auch möglich, die rheologische Kupplung 24 derart gezielt anzusteuern, dass das zu übertragende Drehmoment genau eingestellt werden kann. Zu diesem Zweck wird die Steuerfelderzeugungseinheit 26 durch die Steuerungseinheit 28 und die Steuerleitung 32 gezielt so angesteuert, dass nicht alle Ketten bei einer vorbestimmten Grenzbelastung reißen. Es verbleiben vielmehr einzelne Ketten, so dass weiterhin eine Drehmomentübertragung möglich ist, allerdings wird dieses nicht identisch übertragen, sondern abgeschwächt, da durch die gezielte Steuerung die Viskosität des Übertragungsmediums 42 verändert wurde.

## Patentansprüche

1. Zahnärztliches Instrument mit einem Antrieb (4) und einem Abtrieb (6), wobei zwischen dem Antrieb (4) und dem Abtrieb (6) eine Kupplung (24) zur Übertragung eines Drehmomentes von dem Antrieb (4) auf den Abtrieb (6) und an dem Abtrieb (6) ein Behandlungswerkzeug (22) vorgesehen ist, **dadurch gekennzeichnet, dass** die Kupplung (24) zur Übertragung eines Drehmomentes von dem Antrieb (4) auf den Abtrieb (6) als rheologische Kupplung (24) ausgebildet ist.

2. Zahnärztliches Instrument nach Anspruch 1, **dadurch gekennzeichnet, dass** die rheologische Kupplung (24) als eine elektrorheologische und/oder eine magnetorheologische Kupplung (24) ausgebildet ist.

3. Zahnärztliches Handinstrument nach Anspruch 1 oder 2, **dadurch gekennzeichnet, dass** die rheologische Kupplung (24) als eine dilatant-rheologische Kupplung (24) ausgebildet ist.

4. Zahnärztliches Instrument nach einem der Ansprüche 1 bis 3, **dadurch gekennzeichnet, dass** die Kupplung (24) eine Steuerfelderzeugungseinheit (26) zur Erzeugung eines magnetischen Feldes für die magnetorheologische Kupplung (24) bzw. zur Erzeugung eines elektrischen Feldes für die elektrorheologische Kupplung (24) aufweist.

5. Zahnärztliches Instrument nach Anspruch 4, **dadurch gekennzeichnet, dass** eine Steuerungseinheit (28) zur Steuerung des Antriebes (4) und der Steuerfelderzeugungseinheit (26) vorgesehen ist.

6. Zahnärztliches Instrument nach einem der Ansprüche 1 bis 5, **dadurch gekennzeichnet, dass** die Kupplung (24) ein Drehmomentübertragungsmedium (40) aufweist, das sich aus einer Trägerflüssigkeit (42) zusammensetzt, in die polarisierbare Festkörperteilchen (44) dispergiert sind.

7. Zahnärztliches Instrument nach Anspruch 6, **dadurch gekennzeichnet, dass** das Drehmomentübertragungsmedium (40) ferner einen Stabilisator (46) umfasst.

8. Zahnärztliches Instrument nach einem der Ansprüche 6 oder 7, **dadurch gekennzeichnet, dass** die Trägerflüssigkeit (42) ein Öl, insbesondere ein Silikonöl ist.

9. Zahnärztliches Instrument nach einem der Ansprüche 6 bis 8, **dadurch gekennzeichnet, dass** die polarisierbaren Festkörperteilchen (44) aus Metall, insbesondere aus ferromagnetischem Metall bestehen.

10. Zahnärztliches Instrument nach einem der Ansprüche 6 bis 9, **dadurch gekennzeichnet, dass** die Steuerfelderzeugungseinheit (26) als Spulenanordnung ausgebildet ist, wobei sich das Drehmomentübertragungsmedium (40) im Wirkungsbereich des magnetischen Feldes der Spulenanordnung befindet.

11. Zahnärztliches Instrument nach Anspruch 10, **dadurch gekennzeichnet, dass** die Spulenanordnung (26) als Ringkernspule ausgebildet wird, die die Kupplung (24) mantelseitig umgibt.

12. Zahnärztliches Instrument nach einem der Ansprüche 6 bis 9, **dadurch gekennzeichnet, dass** die Steuerfelderzeugungseinheit (26) als Kondensatoranordnung ausgebildet ist, wobei sich das Drehmomentübertragungsmedium (40) im Wirkungsbereich des elektrischen Feldes der Kondensatoranordnung befindet.

13. Zahnärztliches Instrument nach einem der Ansprüche 1 bis 12, **dadurch gekennzeichnet, dass** die Größe des abtriebsseitigen Drehmoments (M2) durch die Kupplung (24) steuerbar ist.

14. Zahnärztliches Instrument nach einem der Ansprüche 1 bis 13, **dadurch gekennzeichnet, dass** das in dem zahnärztlichen Instrument ein Sensor (17) vorgesehen ist, der das über die Kupplung (24) übertragene Moment (M2) misst.

15. Zahnärztliches Instrument nach einem der Ansprüche 1 bis 14, **dadurch gekennzeichnet, dass** die Kupplung (24) in sich abgeschlossen und/oder gekapselt ist.
